# EUROPEAN PATENT APPLICATION

(11) **EP 1 118 649 A1**
(43) Date of publication of application: **25.07.2001**
(21) Application number: 01300502.0
(22) Date of filing: 19.01.2001
(51) Int. Cl.: C09K 11/08, C08K 3/24, C08J 3/22

(54) **Plastics masterbatches**

(30) Priority: 21.01.2000 GB 0001260
(71) Applicant: Douglas Baker Plastics Limited, Mount Pleasant, Bilston WV14 7LH (GB)
(72) Inventor: Bennett, Ian, Tipton, West Midlands DY4 7XT (GB); Cook, Christopher Robert, Perton Ridge WV6 7HD (GB)
(74) Representative: Kinton, Colin David

(57) **Abstract**

A masterbatch of a luminescent strontium aluminate pigment in a plastics carrier material can contain up to 70% by weight of the pigment. Articles (e.g. bottles, films or tapes) made from the masterbatch can exhibit luminescence (after exposure to natural or artificial light) for 4 to 8 hours (in some cases up to 12 hours).

## Description

This invention relates to plastics masterbatches and in particular to plastics masterbatches containing a luminescent pigment, to a method of making such masterbatches and to plastics articles made therefrom.

Masterbatches comprising a luminescent pigment dispersed in a plastics carrier material are known, the most commonly-employed pigment being a pigment containing zinc sulphide. However, articles made from such masterbatches, after exposure to natural or artificial light, have been found to have only a limited duration of luminescence.

A pigment having a potentially much greater period of luminescence is based on strontium aluminate and is known per se. However, previous attempts to make masterbatches containing strontium aluminate - based pigments have only been successful in attaining pigment levels of 10-15% by weight (based on the total weight of the masterbatch) and articles made from these masterbatches have again been found to have only limited duration of luminescence.

The applicants have devised a masterbatch which can contain up to 70% by weight (based on the total weight of the masterbatch) of strontium aluminate in a wide variety of plastics carrier materials.

Accordingly, the present invention provides, in a first aspect, a masterbatch comprising a luminescent pigment uniformly distributed in a plastics carrier material, in which the luminescent pigment consists essentially of strontium aluminate and said strontium aluminate pigment is present in said masterbatch in an amount of at least 30% by weight (based on the total weight of said masterbatch).

Preferably, the amount of strontium aluminate pigment in the masterbatch is from 30% to 70% by weight, for example 35% to 65% by weight (based on the total weight of said masterbatch).

The particle size of the strontium aluminate pigment is preferably in the range 7 to 45 microns, for example 8 to 30 microns.

Suitable strontium aluminate pigments for use in connection with the present invention are available from Nemoto Corporation under the name LUMINOVA or from Riedel - de Haen GmbH under the name LUMILUX.

The plastics carrier material may suitably consist of a polyolefin-based homopolymer, copolymer or terpolymer. Preferably, the carrier material comprises ethylene/vinyl acetate or ethylene/methacrylate copolymer. Other polyolefin-based polymers which can be used as the carrier material include polyethylene (high-density, medium-density or low-density), polypropylene, polystyrene, polyvinyl chloride, polyvinyl acetate, polyacetals, styrene/acrylonitrile and acrylonitrile/butadiene/styrene polymers.

Alternatively, the carrier material may comprise polyamides, polycarbonates, polyurethanes or polyesters such as polyethylene terephthalate.

In a second aspect, the present invention provides a method for making a masterbatch according to the first aspect hereinabove described, in which the method comprises the steps of:
(i) mixing together, in the absence of moisture and without imposing a shear force thereon, the strontium aluminate pigment and the plastics carrier material (and optionally one or more processing adjuvants) to form a first mixture;
(ii) compounding the first mixture in an extruder to form a substantially homogeneous second mixture;
(iii) extruding the second mixture through the die of the extruder and pelletising the extruded material.

Step (i) above may suitably be carried out in a bowl-type blade/paddle mixer, at a preferred mixing speed of about 1500 r.p.m.

Suitably, step (ii) above may be carried out in a twin-screw extruder, in which the profile segments have been configured to allow a gentle mixing action. The barrel of the extruder should be short (relative to the pitch of the screws) and the temperature profile of the extruder is set to the optimum requirements of the plastics carrier material used in the manufacture of the masterbatch.

Prior to step (i) above, the pigment, the carrier material and the processing adjuvants are carefully weighed out. Extractor means are provided over the balance and protection means (e.g. mask, safety-glasses) should be worn by each operator.

Step (i) above is to be carried out in the absence of moisture. This may be achieved by setting a maximum weight for each batch of material made according to the method of the present invention. A suitable maximum weight would be in the range 10 to 30 kg, preferably no greater than 25 kg.

Where ambient temperatures are below about 16°C, it is advisable to oven-dry the first mixture prior to extrusion.

Processing adjuvants which may be added to the pigment and carrier during step (i) above include, for example, waxes such as polyethylene wax and the various montan waxes, especially calcium montanate wax, together with minor amounts of alkaline earth metal stearates, especially calcium stearate. Other processing aids, such as oils, may if necessary be added to the mixture prior to step (ii) above.

In a third aspect, the present invention provides plastics articles made from the masterbatch according to the first aspect hereinabove described.

Articles according to said third aspect may be made by means of fabrication processes including compound extrusion, profile extrusion, filament extrusion, single or multilayer co-extrusion, injection-moulding, blow-moulding, single, twin or triple shot-moulding and calendering.

Examples of articles according to said third aspect include blown bottles, blown films, calendered films and tapes.

All such articles will, after exposure to natural or artificial light, exhibit luminescence for between 4 and 8 hours (in some cases for up to 12 hours).

The present invention will be illustrated, merely by way of example, as follows:

The formulations shown in Examples 1 to 4 below were mixed together in the absence of moisture and without imposing a shear force thereon to form a first mixture. The first mixture was compounded in an extruder to a substantially homogeneous second mixture, which was then extruded and pelletised.

In the Examples, all "percentages" are by weight, based on the total weight of the formulation.

| **Example 1** | | |
|---|---|---|
| | Strontium aluminate pigment | 35% |
| * | Wax | 1.4% |
| | Calcium stearate | 0.1% |
| | Ethylene/vinyl acetate copolymer | 63.5% |

| **Example 2** | | |
|---|---|---|
| | Strontium aluminate pigment | 35% |
| * | Wax | 1.4% |
| | Calcium stearate | 0.1% |
| | Ethylene/methacrylate copolymer | 63.5% |

| **Example 3** | | |
|---|---|---|
| | Strontium aluminate pigment | 65% |
| * | Wax | 1.4% |
| | Calcium stearate | 0.1% |
| | Ethylene/vinyl acetate copolymer | 33.5% |

| **Example 4** | | |
|---|---|---|
| | Strontium aluminate pigment | 65% |
| * | Wax | 1.4% |
| | Calcium stearate | 0.1% |
| | Ethylene/methacrylate copolymer | 33.5% |

| | | |
|---|---|---|
| * polyethylene wax or calcium montanate wax may be used. | | |

## Claims

1. A masterbatch comprising a luminescent pigment uniformly distributed in a plastics carrier material, in which the luminescent pigment consists essentially of strontium aluminate, characterised in that said strontium aluminate pigment is present in said masterbatch in an amount of at least 30% by weight (based on the total weight of said masterbatch).

2. A masterbatch according to Claim 1, in which the amount of strontium aluminate pigment is from 30% to 70% (e.g. 35% to 65%) by weight (based on the total weight of said masterbatch).

3. A Masterbatch according to Claim 1,or 2, characterised in that the particle size of the strontium aluminate pigment is in the range 7 to 45 microns, for example 8 to 30 microns.

4. A masterbatch according to any preceding claim, characterised in that the plastics carrier material is a polyolefin-based homopolymer, copolymer or terpolymer.

5. A masterbatch according to Claim 4, characterised in that the plastics carrier material comprises ethylene/vinyl acetate copolymer or ethylene/methacrylate copolymer.

6. A masterbatch according to Claim 4, characterised in that the plastics carrier material comprises high-density, medium-density or low-density polyethylene, polypropylene, polystyrene, polyvinyl chloride, polyvinyl acetate, polyacetal, styrene/acrylonitrile or acrylonitrile/butadiene/styrene polymers.

7. A masterbatch according to any one of Claims 1 to 3, characterised in that the plastics carrier material is selected from the group consisting of polyamides, polycarbonates, polyurethanes and polyesters, (e.g. polyethylene terephthalate).

8. A method of making a masterbatch according to any preceding claim, said method being characterised by:
(i) mixing together, in the absence of moisture and without imposing a shear force thereon, the strontium aluminate pigment and the plastics carrier material (and optionally one or more processing adjuvants) to form a first mixture;
(ii) compounding the first mixture in an extruder to form a substantially homogeneous second mixture;
(iii) extruding the second mixture through the die of the extruder and pelletising the extruded material.

9. A method according to Claim 8, characterised in that step (i) is carried out at a mixing speed of about 1500 r.p.m.

10. A method according to Claim 8 or 9, characterised in that the maximum weight of each batch of material made according to said method is in the range 10kg to 30kg.

11. A method according to Claim 8, 9 or 10, characterised in that the first mixture is oven-dried prior to extrusion.

12. A method according to Claim 8, characterised in that said optional processing adjuvants comprise waxes, oils or alkaline earth metal stearates.
